# DEMANDE DE BREVET EUROPEEN

(11) **EP 4 831 044 A1**
(43) Date de publication de la demande: **28.10.2026**
(21) Numéro de dépôt: 26174003.9
(22) Date de dépôt: 22.04.2026
(51) Int. Cl.: B62D 25/20, B62D 65/02

(54) **PROCÉDÉ DE FABRICATION D'UN VÉHICULE SELON DEUX CONFIGURATIONS DE FABRICATION ET ENSEMBLE DE DEUX VÉHICULES ASSOCIÉS**

(30) Priorité: 23.04.2025 FR 2504307
(71) Demandeur: Flexis, 92100 Boulogne Billancourt (FR)
(72) Inventeur: ALLARD, Benoit, 78640 VILLIERS SAINT-FREDERIC (FR); CARIER, Jerome, 78640 VILLIERS SAINT-FREDERIC (FR); CAUDRON, Michael, 78640 VILLIERS SAINT-FREDERIC (FR); ENJOLRAS, Gilles, 78640 VILLIERS SAINT-FREDERIC (FR)
(74) Mandataire: Lavoix

(57) **Abrégé**

La présente invention concerne un procédé de fabrication d'un véhicule (12A, 12B), dans lequel le véhicule (12A, 12B) comprend une unité centrale (25A, 25B) comprenant:
a) un groupe central commun (26) d'éléments comprenant une batterie, et
b) deux bavolets.

Le procédé comprend une étape de sélection de configuration du véhicule entre une première configuration de fabrication et une deuxième configuration de fabrication,
La largeur du véhicule (12A) selon la première configuration de fabrication est inférieure à celle du véhicule (12B) selon la deuxième configuration de fabrication.

Le groupe central commun (26) d'éléments est identique dans les deux configurations de fabrication.

Dans la première configuration de fabrication, chacun des bavolets est fixé à l'une des faces de la batterie.

Le véhicule (12B) dans la deuxième configuration comprend en outre deux pièces d'interface fixées chacune entre l'un des bavolets (28) et la face correspondante de la batterie.

## Description

La présente invention concerne un procédé de fabrication d'un véhicule et un ensemble de véhicules associés.

Il est connu de fabriquer des véhicules, en particulier des véhicules automobiles, de différentes tailles, et en particulier de différentes largeurs, pour s'adapter à différentes utilisations spécifiques.

La conception et le procédé de fabrication du véhicule est lui aussi spécifique à la taille choisie, et en particulier à la largeur spécifique choisie.

En particulier, les différents composants du véhicule sont conçus en prenant en compte les contraintes de cette largeur spécifique.

Cette grande diversité dans les composants et dans les procédés de fabrication est donc onéreuse pour les fabricants.

Un des buts de l'invention est de rendre la fabrication de véhicules plus économique.

En particulier, un des buts de l'invention est de proposer un procédé pour la fabrication de véhicules de largeurs différentes, tout en conservant un grand nombre de pièces en commun.

A cet effet, l'invention a pour objet un procédé de fabrication d'un véhicule, dans lequel le véhicule comprend une unité centrale comprenant:
- un groupe central commun d'éléments comprenant au moins :
   - deux longerons, chacun des longerons s'étendant selon une direction longitudinale, les deux longerons étant espacés l'un de l'autre selon une direction transversale perpendiculaire à la direction longitudinale, et
   - une batterie agencée sous les deux longerons et s'étendant selon la direction transversale entre une face droite et une face gauche, et
- deux bavolets espacés l'un de l'autre selon la direction transversale;

caractérisé en ce que le procédé comprend une étape de sélection de configuration du véhicule entre une première configuration de fabrication et une deuxième configuration de fabrication,
en ce que la largeur du véhicule selon la première configuration de fabrication est inférieure à celle du véhicule selon la deuxième configuration de fabrication, la largeur étant mesurée selon la direction transversale,
en ce que le groupe central commun d'éléments étant identique dans la première configuration de fabrication et dans la deuxième configuration de fabrication,
en ce que dans la première configuration de fabrication, l'un des bavolets est fixé à la face droite de la batterie et l'autre des bavolets est fixé à la face gauche de la batterie, et
en ce que le véhicule dans la deuxième configuration comprend en outre deux pièces d'interface, l'une des pièces d'interface étant fixée entre l'un des bavolets et la face droite de la batterie et l'autre des pièces d'interface étant fixée entre l'autre des bavolets et la face gauche de la batterie.

Suivant d'autres aspects avantageux de l'invention, le procédé comprend une ou plusieurs des caractéristiques suivantes, prises isolément ou suivant toutes les combinaisons techniquement possibles :
- La différence de largeur du véhicule selon la première configuration et selon la deuxième configuration est comprise entre 80 mm et 160 mm, et de préférence entre 100 mm et 130 mm.
- Chacune des pièces d'interface est une équerre.
- Le véhicule comprend une unité arrière comprenant un groupe arrière commun d'éléments et deux bras de train arrière,
   le groupe arrière commun d'éléments étant identique dans la première configuration de fabrication et dans la deuxième configuration de fabrication,
   les deux bras de train arrière étant espacés l'un de l'autre selon la direction transversale, la distance entre les deux bras de train arrière dans la première configuration de fabrication étant inférieure à celle dans la deuxième configuration de fabrication.
- L'unité arrière comprend un deux amortisseurs arrière fixés chacun à l'un des bras de train arrière, la distance entre les deux amortisseurs arrière dans la première configuration de fabrication étant inférieure à celle dans la deuxième configuration de fabrication.
- Le véhicule comprend une unité avant comprenant un groupe avant commun d'éléments, le groupe avant commun d'éléments étant identique dans la première configuration de fabrication et dans la deuxième configuration de fabrication,
   dans la première configuration, l'unité avant comprenant deux premiers bras de train avant, et
   dans la deuxième configuration, l'unité avant comprenant deux deuxièmes bras de train avant, les deuxièmes bras de train avant étant plus longs que les premiers bras de train avant.
- Le véhicule comprend une unité planche de bord comprenant un groupe planche de bord commun d'éléments, le groupe planche de bord commun d'éléments étant identique dans la première configuration de fabrication et dans la deuxième configuration de fabrication,
   le groupe planche de bord comprenant une traverse de planche de bord s'étendant transversalement.
- L'unité planche de bord dans la première configuration comprend au moins un premier élément structurel fixé à la traverse de planche de bord et l'unité planche de bord dans la deuxième configuration comprend au moins un deuxième élément structurel fixé à la traverse de planche de bord, le deuxième élément structurel étant plus large que le premier élément structurel.

L'invention concerne également un ensemble comprenant :
- un premier véhicule fabriqué selon le procédé de fabrication décrit ci-dessus, le premier véhicule étant selon la première configuration, et
- un deuxième véhicule fabriqué selon le procédé de fabrication décrit ci-dessus, le deuxième véhicule étant selon la deuxième configuration ;
la largeur du premier véhicule étant inférieure à celle du deuxième véhicule.

L'invention apparaîtra plus clairement à la lecture de la description qui va suivre, donnée uniquement à titre d'exemple non limitatif, et faite en référence aux dessins dans lesquels :
La Figure 1 est une vue schématique d'un ensemble selon l'invention comprenant un premier véhicule et un deuxième véhicule,
La Figure 2 est une vue schématique de dessous du premier véhicule et du deuxième véhicule de la Figure 1,
La Figure 3 est une vue en perspective d'une unité centrale du premier véhicule de la Figure 1,
La Figure 4 est une vue schématique de la fixation d'un bavolet dans le premier véhicule et dans le deuxième véhicule,
La Figure 5 est une vue de dessous d'une unité avant du premier véhicule de la Figure 1, et
La Figure 6 est une vue de dessous d'une unité arrière et d'une partie de l'unité centrale du premier véhicule de la Figure 1.

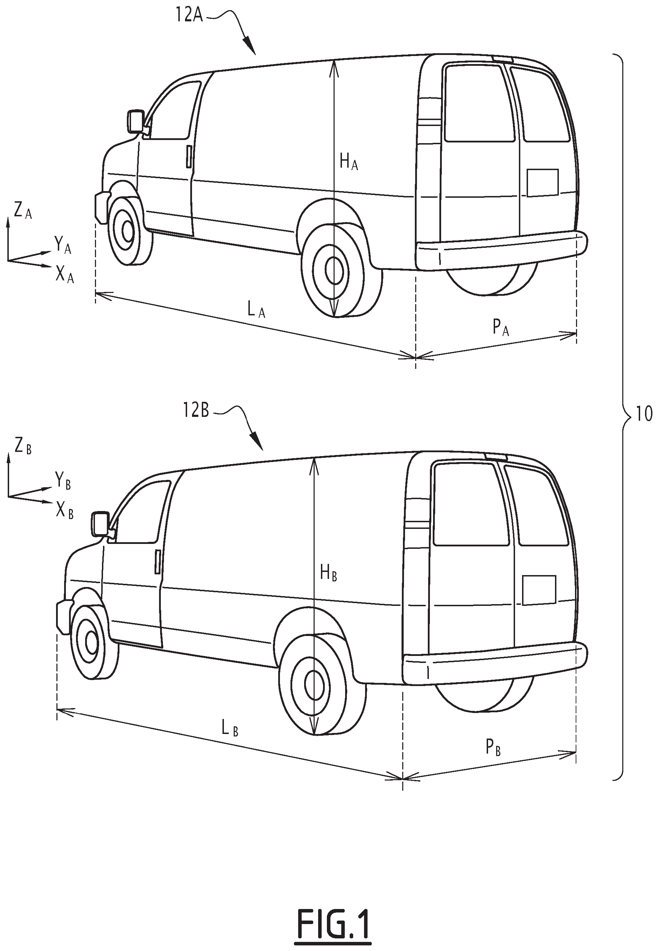

La Figure 1 illustre un ensemble 10 selon l'invention.

L'ensemble 10 comprend un premier véhicule 12A et un deuxième véhicule 12B.

Par souci de clarté, dans la suite de la description, les éléments analogues entre le premier véhicule 12A et le deuxième véhicule 12B portent les mêmes références. Les éléments spécifiques au premier véhicule 12A portent la lettre A à la fin de leur référence et ceux spécifique au deuxième véhicule 12B la lettre B.

Chacun du premier véhicule 12A et du deuxième véhicule 12B est par exemple un véhicule automobile, en particulier un véhicule utilitaire, notamment un véhicule utilitaire léger.

En particulier, chacun du premier véhicule 12A et du deuxième véhicule 12B est destiné au transport de marchandises, telles que des colis, et/ou de passagers.

Chacun du premier véhicule 12A et du deuxième véhicule 12B est par exemple une camionnette, comme illustré sur la Figure 1.

Chacun du premier véhicule 12A et du deuxième véhicule 12B est de préférence un véhicule électrique.

Pour des raisons de clarté, on définit, pour chacun du premier véhicule 12A et du deuxième véhicule 12B, un repère orthonormé X_{A,B}Y_{A,B}Z_{A,B} comprenant une direction longitudinale X_{A,B}, une direction transversale Y_{A,B} et une direction verticale Z_{A,B}. La direction longitudinale X_{A,B} s'étend selon l'axe d'avancement du véhicule 12A,B et correspond à un axe avant-arrière du véhicule 12A,B. La direction transversale Y_{A,B} est perpendiculaire à la direction longitudinale X_{A,B} et correspond à un axe gauche-droite du véhicule 12A,B. La direction verticale Z_{A,B} est perpendiculaire à la direction longitudinale X_{A,B} et à la direction transversale Y_{A,B} et correspond à un axe bas-haut du véhicule 12A,B.

Les termes « haut » et « bas » sont définis par rapport à la direction verticale Z_{A,B} correspondant à la hauteur du véhicule 12A,B. Les termes « gauche », « droite », « avant » et « arrière » sont définis par rapport au sens de la direction d'avancement usuel du véhicule 12A,B.

Le premier véhicule 12A est selon une première configuration de fabrication.

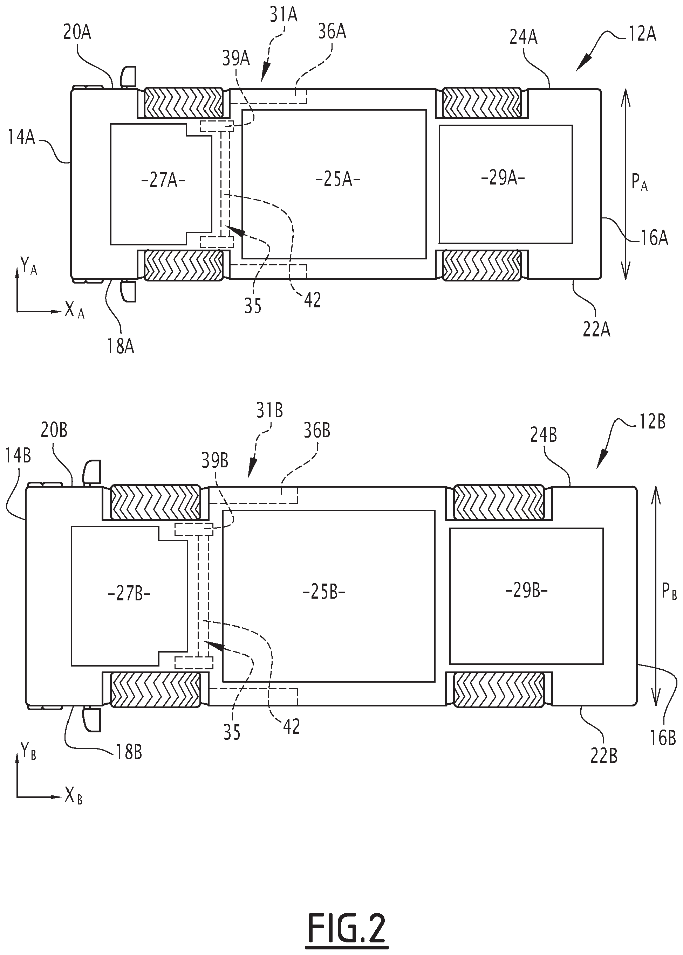

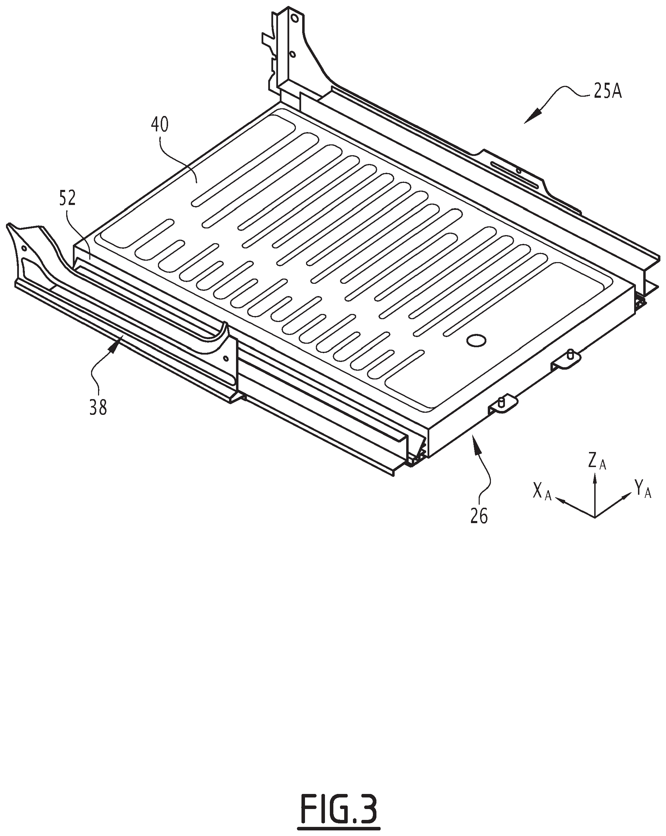

Un exemple de premier véhicule 12A est visible sur les Figures 1 et 2 et partiellement sur les Figures 3 à 6.

De préférence, le premier véhicule 12A est un véhicule d'une première taille.

Le premier véhicule 12A présente par exemple une largeur P_{A}, mesurée selon la direction transversale Y_{A}, comprise entre 1 850 mm et 2 000 mm, et plus particulièrement entre 1 910 mm et 1 940 mm, et encore plus particulièrement sensiblement égale à 1 920 mm.

Comme cela est visible sur la Figure 2, la largeur P_{A} correspond par exemple à la largeur sur ailes, et notamment au maximum entre la largeur sur ailes avant et la largeur sur ailes arrière.

La largeur sur ailes est définie ici comme la distance selon la direction transversale Y_{A} entre les deux ailes avant 18A, 20A, respectivement les deux ailes arrière 22A, 24A, et notamment entre l'aile avant droite 18A, respectivement l'aile arrière droite 22A, et l'aile avant gauche 20A, respectivement l'aile arrière gauche 24A.

Par exemple, le premier véhicule 12A présente une longueur L_{A}, mesurée selon la direction longitudinale X_{A} entre une extrémité avant 14A et une extrémité arrière 16A du premier véhicule 12A, comprise entre 4 300 mm et 5 000 mm, et plus particulièrement entre 4 600 mm et 4 700 mm.

Par exemple, le premier véhicule 12A présente une hauteur H_{A}, mesurée selon la direction verticale Z_{A}, comprise entre 1 700 mm et 2 000 mm.

Le premier véhicule 12A comprend une unité centrale 25A, et de préférence au moins une parmi une unité avant 27A, une unité arrière 29A et une unité planche de bord 31A.

L'unité centrale 25A du premier véhicule 12A est par exemple agencée au centre du premier véhicule 12A, notamment selon la direction longitudinale X_{A}.

L'unité centrale 25A comprend un groupe central 26 commun d'éléments et deux bavolets 28.

Optionnellement, l'unité centrale 25A du premier véhicule 12A comprend également un premier plancher 37A.

Le groupe central 26 comprend au moins deux longerons 38 et une batterie 40.

De manière optionnelle mais préférée, le groupe central 26 comprend aussi une traverse 45.

Les deux longerons 38 s'étendent chacun selon la direction longitudinale X_{A} et sont espacés l'un de l'autre selon la direction transversale Y_{A}.

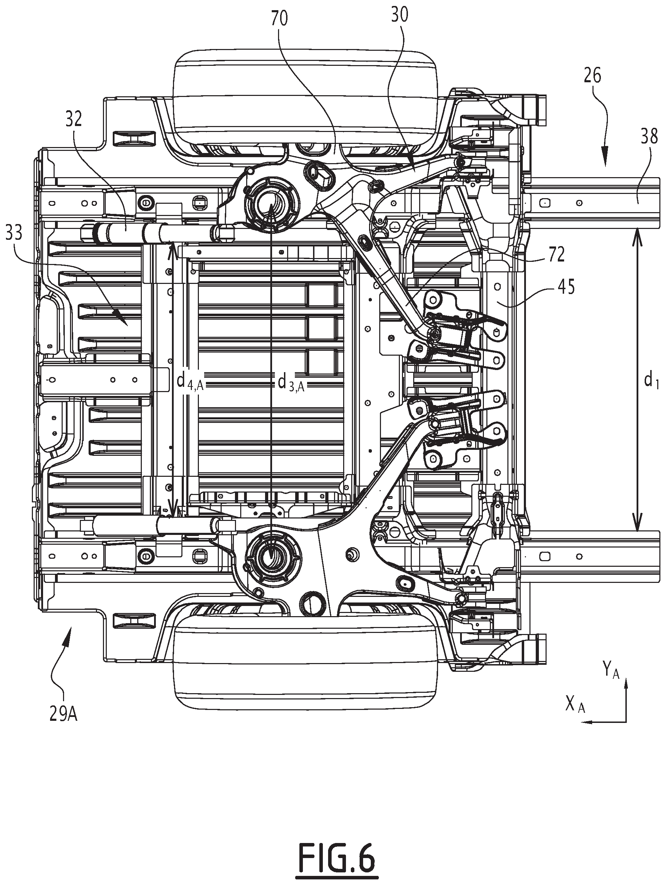

En particulier, le deux longerons 38 correspondent à un longeron gauche et un longeron droit, comme cela est visible sur la Figure 6.

Les deux longerons 38 sont par exemple espacés l'un de l'autre d'une distance d₁, notamment mesurée selon la direction transversale Y_{A}, par exemple comprise entre 1 400 mm et 1 900 mm.

Chacun des deux longerons 38 est par exemple une poutre, notamment métallique, par exemple en acier ou en alliage d'aluminium.

Chacun des deux longerons 38 présente par exemple une section en boite ouverte, notamment de forme sensiblement carrée, en particulier de côté compris entre 3 cm et 15 cm.

Chacun des deux longerons 38 définit de préférence une face interne 48 et une face externe 50 opposées l'une de l'autre selon la direction transversale Y_{A}.

En particulier, les faces internes 48 de deux longerons 38 s'étendent en regard l'une de l'autre.

La batterie 40 est agencée sous les deux longerons 38.

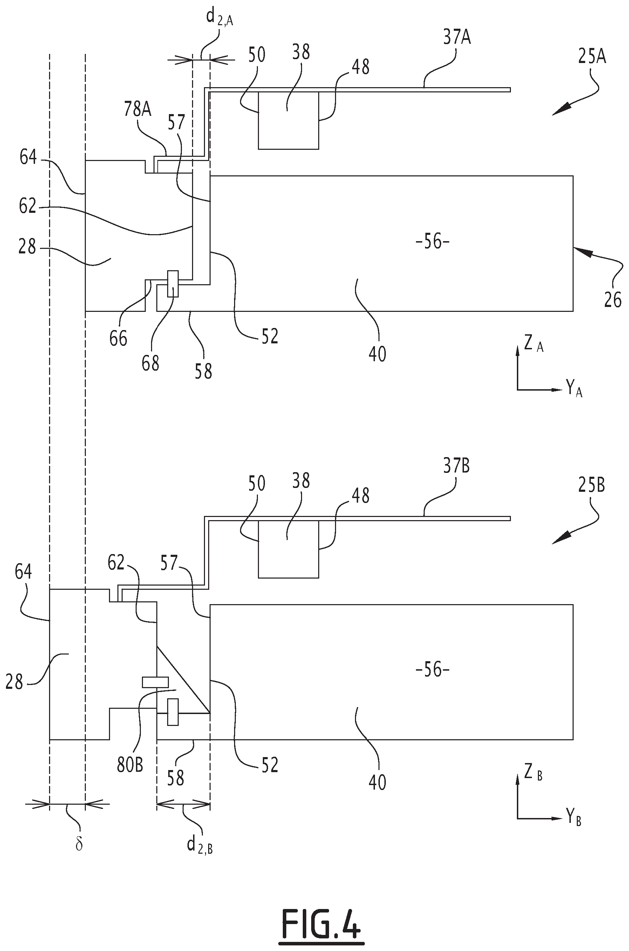

La batterie 40 s'étend selon la direction transversale Y_{A} entre une face droite 52 et une face gauche. Uniquement la face droite est visible sur la Figure 4.

La batterie 40 est de préférence une batterie de traction, en particulier avec une tension aux bornes de 800 V.

La batterie 40 comprend par exemple un boitier de protection 54 et des modules 56 de cellules électrochimiques.

Par exemple, le boitier de protection 54 définit une enceinte dans laquelle sont logés les modules 56.

En particulier, le boitier de protection 54 définit par exemple chacune des faces droite 52 et gauche.

Par exemple, chacune des faces droite 52 et gauche comprend une portion plane 57, en particulier verticale, et une patte de fixation 58 s'étendant en saillie externe transversale de la portion plane 57, comme cela est visible sur la Figure 4.

Comme illustré sur la Figure 6, la traverse 45 s'étend par exemple selon la direction transversale Y_{A}, en particulier entre les deux longerons 38.

De préférence, la traverse 45 relie les deux longerons 38.

Les deux bavolets 28 sont espacés l'un de l'autre selon la direction transversale Y_{A}.

En particulier, le deux bavolets 28 correspondent à un bavolet gauche et un bavolet droit. Uniquement le bavolet droit est visible sur la Figure 4.

Chacun des bavolets 28 est de préférence agencé à l'avant du premier véhicule 12A.

En particulier, chacun des bavolets 28 est par exemple une pièce qui assure la continuité entre le bas de la portière correspondante et le soubassement du premier véhicule 12A.

Chacun des bavolets 28 définit notamment une face interne 62 et une face externe 64 opposées l'une de l'autre selon la direction transversale YA. La face externe 64 s'étend en particulier vers l'extérieur du premier véhicule 12A.

Comme illustré sur la Figure 4, la face interne 62 présente par exemple une hauteur, mesurée selon la direction verticale Z, plus faible que la face externe 64, de sorte que chacun des bavolets 28 définit par exemple un épaulement 66 entre les deux.

Chacun des bavolets 28 s'étend de préférence en regard de la face externe 50 du longeron 38 correspondant.

Plus particulièrement, la face interne 62 de chacun des bavolets 28 s'étend de préférence en regard de la face externe 50 du longeron 38 correspondant.

Plus précisément, la face interne 62 de chacun des bavolets 28 s'étend par exemple à une distance d₂,_{A} de la face externe 50 du longeron 38 correspondant, et notamment de sa portion plane 57, comme cela est visible sur la Figure 4.

La distance d₂,_{A}, notamment mesurée selon la direction transversale Y_{A}, est par exemple comprise entre 50 mm et 150 mm.

Dans la première configuration de fabrication (premier véhicule 12A), l'un des bavolets 28, nommé bavolet droit, est fixé à la face droite 52 de la batterie 40, comme cela est illustré sur la Figure 4. L'autre des bavolets 28, nommé bavolet gauche, est fixé à la face gauche de la batterie 40.

Par exemple, le bavolet droit 28, et notamment son épaulement 66, est fixé sur la patte de fixation 58 de la face droite 52 de la batterie 40.

De même, le bavolet gauche 28, et notamment son épaulement 66, est par exemple fixé sur la patte de fixation 58 de la face gauche de la batterie 40.

De préférence, chacun des bavolets 28 est fixé à la batterie 40 par un moyen de fixation 68, tel qu'une vis par exemple.

De préférence, le premier plancher 37A est en particulier fixé sur les longerons 38.

Par exemple, le premier plancher 37A définit des marchepieds 78A, notamment au niveau des portières, et en particulier fixé au bavolet 28 correspondant, comme cela est visible sur la Figure 4.

L'unité avant 27A du premier véhicule 12A est par exemple agencée à l'avant du premier véhicule 12A.

En particulier, l'unité avant 27A comprend un groupe avant 44 commun d'éléments et de préférence deux premiers bras de train avant 34A.

De manière avantageuse, le groupe avant 44 comprend une pluralité de composants, notamment pour la direction, la suspension et la propulsion du véhicule, dont par exemple un moteur, une transmission, un différentiel, une direction et une suspension avant.

De préférence, l'unité avant 27A comprend deux premiers bras de train avant 34A, en particulier assurant avantageusement une liaison entre les roues avant et le châssis.

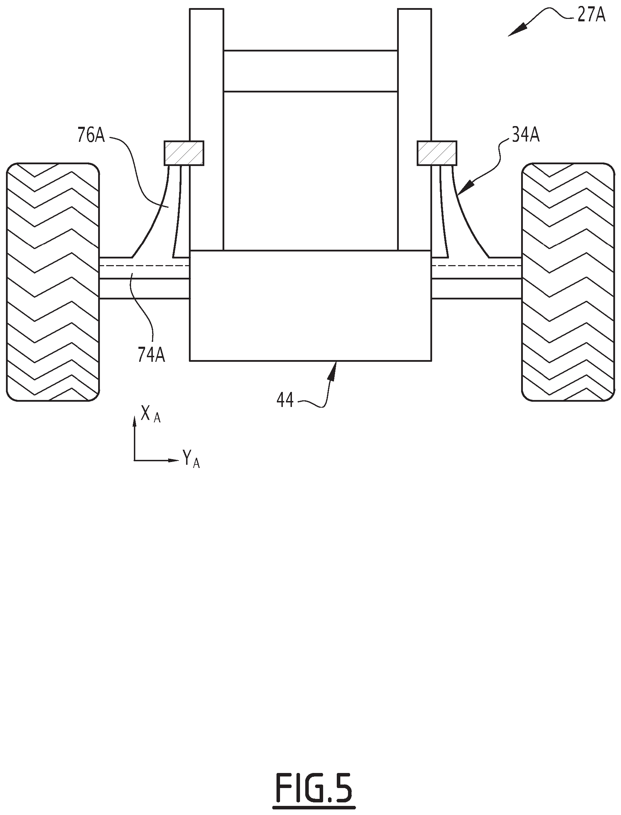

Les deux premiers bras de train avant 34A sont par exemple espacés l'un de l'autre selon la direction transversale Y_{A}, comme cela est visible sur la Figure 5.

En particulier, les deux premiers bras de train avant 34A correspondent à un bras de train avant gauche et un bras de train avant droit.

Dans le mode de réalisation illustré, chacun des deux premiers bras de train avant 34A est notamment un bras à double triangulation.

Autrement dit, chacun des deux premiers bras de train avant 34A comprend un bras supérieur (non visible sur les Figures) et un bras inférieur agencés l'un au-dessus de l'autre selon la direction verticale Z_{A}.

Chacun des bras supérieurs et inférieur comprend de préférence une branche transversale 74A, par exemple fixée au moyeu de la roue avant correspondante, et une branche inclinée 76A, en particulier formant un angle non nul avec la branche transversale 74A.

L'unité arrière 29A du premier véhicule 12A est par exemple agencée à l'arrière du premier véhicule 12A.

En particulier, l'unité arrière 29A comprend un groupe arrière 33 commun d'éléments, deux bras de train arrière 30, et de préférence également deux amortisseurs arrière 32.

De manière avantageuse, le groupe arrière 33 comprend une pluralité de composants, notamment pour la direction, la suspension et la propulsion du véhicule, dont par exemple un essieu arrière et un différentiel arrière.

Comme cela est visible sur la Figure 6, les deux bras de train arrière 30 assurent de préférence une liaison entre les roues arrière et le châssis.

En particulier, chacun des deux bras de train arrière 30 est par exemple fixé à un des longerons 38 et de préférence également à la traverse 45.

En particulier, les deux bras de train arrière 30 correspondent à un bras de train arrière gauche, notamment fixé au longeron gauche, et un bras de train arrière droit, notamment fixé au longeron droit.

Chacun des bras de train arrière 30 comprend par exemple une branche principale 70, notamment s'étendant selon la direction longitudinale X_{A}, et des branches secondaires 72.

Les deux bras de train arrière 30 sont par exemple espacés l'un de l'autre selon la direction transversale Y_{A}.

En particulier, les deux bras de train arrière 30 sont par exemple espacé l'un de l'autre d'une distance d₃,_{A}, notamment mesurée selon la direction transversale Y_{A}, en particulier entre les deux branches principales 70. La distance d₃,_{A} par exemple comprise entre 1 300 mm et 1 800 mm.

Comme cela est visible sur la Figure 6, chacun des deux amortisseurs arrière 32 est fixé à l'un des bras de train arrière 30.

Par exemple, chacun des deux amortisseurs arrière 32 est fixé à l'extrémité arrière de la branche principale 70 du bras de train arrière 30 correspondant.

En particulier, les deux amortisseurs arrière 32 correspondent à un amortisseur arrière gauche, notamment fixé au bras de train arrière gauche, et un amortisseur droit, notamment fixé au bras de train arrière droit.

Chacun des deux amortisseurs arrière 32 sont par exemple espacés l'un de l'autre selon la direction transversale Y_{A}.

En particulier, les deux amortisseurs arrière 32 sont par exemple espacés l'un de l'autre d'une distance d₄,_{A}, notamment mesurée selon la direction transversale Y_{A}, comprise entre 1 200 mm et 1 700 mm.

Plus précisément, dans la première configuration de fabrication (premier véhicule 12A), chacun des amortisseurs arrière 32 est agencé du côté interne du longeron 38 correspondant, comme cela est visible sur la Figure 6.

L'unité planche de bord 31A du premier véhicule 12A comprend un groupe planche de bord 35 commun d'éléments et de préférence au moins un parmi un premier élément de bord 36A et deux premiers éléments structurels 39A.

De préférence, le groupe planche de bord 35 comprend une traverse de planche de bord 42.

Comme illustré sur la Figure 2, la traverse de planche de bord 42 s'étend par exemple selon la direction transversale Y_{A}, en particulier entre une extrémité droite et une extrémité gauche.

En particulier, la traverse de planche de bord 42 est un élément structurel situé derrière le tableau de bord du premier véhicule 12A et sert de de point d'ancrage pour divers composants électriques et mécaniques situés derrière le tableau de bord, tels que les systèmes de chauffage, de ventilation et de climatisation (CVC), les sacs gonflables (également appelés « airbags »), et les instruments de bord par exemple.

La traverse de planche de bord 42 est par exemple fabriquée en acier.

De préférence, l'unité planche de bord 31A comprend au moins un premier élément de bord 36A, et de préférence une pluralité de premiers éléments de bord. Chacun des premiers éléments de bord 36A est notamment choisi parmi un panneau de porte et un panneau de planche de bord.

Avantageusement, l'unité planche de bord 31A comprend deux premiers éléments structurels 39A, et en particulier un premier élément structurel gauche et un premier élément structurel droit.

Chacun des premiers éléments structurels 39A est par exemple fixé à la traverse de planche de bord 50.

Plus précisément, les deux premiers éléments structurels 39A sont des pieds A, c'est-à-dire des éléments structurels qui soutiennent le pare-brise du premier véhicule 12A.

Le deuxième véhicule 12B est selon une deuxième configuration de fabrication.

Un exemple de deuxième véhicule 12B est visible sur les Figures 1 et 2 et partiellement sur la Figure 4.

De préférence, le deuxième véhicule 12B est un véhicule d'une deuxième taille, en particulier plus grande que celle du premier véhicule 12A comme cela est visible sur la Figure 1.

Le deuxième véhicule 12B (selon la deuxième configuration) présente une largeur P_{B} supérieure à celle du premier véhicule 12A (selon la première configuration).

En particulier, la différence Δ entre la largeur P_{A} du premier véhicule 12A et la largeur P_{B} du deuxième véhicule 12B est par exemple comprise entre 80 mm et 160 mm, et de préférence entre 100 mm et 130 mm, et notamment sensiblement égale à 120 mm.

Par exemple, la largeur P_{B}, mesurée selon la direction transversale Y_{B}, est comprise entre 2 000 mm et 2 100 mm, et plus particulièrement sensiblement égale à 2 040 mm.

La largeur P_{B} correspond par exemple à la largeur sur ailes, et notamment au maximum entre la largeur sur ailes avant et la largeur sur ailes arrière.

Par exemple, le deuxième véhicule 12B présente une longueur L_{B}, mesurée selon la direction longitudinale X_{B} entre une extrémité avant 14B et une extrémité arrière 16B du deuxième véhicule 12B, comprise entre 5 000 mm et 6 000 mm, et plus particulièrement entre 5 300 mm et 5 600 mm.

Par exemple, le deuxième véhicule 12B présente une hauteur H_{B}, mesurée selon la direction verticale Z_{B}, comprise entre 2 200 mm et 2 800 mm.

Le deuxième véhicule 12B comprend une unité centrale 25B, et de préférence au moins une parmi une unité avant 27B, une unité arrière 29B et une unité planche de bord 31B.

L'unité centrale 25B du deuxième véhicule 12B est par exemple agencée au centre du deuxième véhicule 12B, notamment selon la direction longitudinale X_{B}.

L'unité centrale 25B comprend le groupe central 26 commun d'éléments, les deux bavolets 28 et deux pièces d'interface 80B.

Optionnellement, l'unité centrale 25B du deuxième véhicule 12B comprend également un deuxième plancher 37B.

Le groupe central 26 est identique dans la première configuration de fabrication et dans la seconde configuration de fabrication.

Autrement dit, les éléments du groupe central 26 sont identiques dans le deuxième véhicule 12B que dans le premier véhicule 12A, et en particulier sont également agencés de la même manière.

Plus précisément, dans le deuxième véhicule 12B, le groupe central 26 comprend les deux longerons 38 et la batterie 40, en particulier identiques et agencés de manière identique à ce qui a été décrit ci-dessus pour le premier véhicule 12A.

De préférence, dans le deuxième véhicule 12B, le groupe central 26 comprend, en outre, une traverse 45, en particulier identique et agencée de manière identique à ce qui a été décrit ci-dessus pour le premier véhicule 12A.

Dans le deuxième véhicule 12B, les deux bavolets 28 sont de préférence identiques à ceux utilisés dans le premier véhicule 12A, mais sont décalés transversalement par les pièces d'interface 80B.

Chaque bavolet 28 du deuxième véhicule 12B est par exemple décalé transversalement d'une distance δ par rapport à ceux du premier véhicule 12A.

La distance δ est par exemple égale à la moitié de la différence Δ entre la largeur P_{A} du premier véhicule 12A et la largeur P_{B} du deuxième véhicule 12B.

En particulier, dans la deuxième configuration (deuxième véhicule 12B), les deux bavolets 28 sont espacés l'un de l'autre selon la direction transversale Y_{A} d'une distance plus grande que dans la première configuration, notamment grâce aux pièces d'interface 80B.

Comme cela est visible sur la Figure 4, la face interne 62 de chacun des bavolets 28 s'étend par exemple à une distance d₂,_{B} de la face externe 50 du longeron 38 correspondant, et notamment de sa portion plane 57, la distance d₂,_{B} étant plus grande que la distance correspondante d₂,_{A} du premier véhicule 12A.

La différence entre ces deux distances d₂,_{B} est par exemple égale à la distance δ, et notamment à la moitié de la différence Δ entre la largeur P_{A} du premier véhicule 12A et la largeur P_{B} du deuxième véhicule 12B.

Dans la deuxième configuration de fabrication (deuxième véhicule 12B), l'une des pièces d'interface 80B, nommée pièce d'interface droite, est fixée entre le bavolet droit 28 et la face droite 52 de la batterie 40, comme cela est illustré sur en bas de la Figure 4. L'autre des pièces d'interface 80B, nommée pièce d'interface gauche, est fixée entre le bavolet gauche et la face gauche de la batterie 40.

Par exemple, chacune des deux pièces d'interface 80B est une équerre.

Plus précisément, chacune des deux pièces d'interface 80B est fixée entre le bavolet 28 correspondant et la face correspondante de la batterie 40.

Par exemple, chacune des deux pièces d'interface 80B est fixée entre la face interne 62 du bavolet 28 correspondant et la patte de fixation 58 de la face correspondante de la batterie 40, comme cela est visible sur la Figure 4.

De préférence, chacune des deux pièces d'interface 80B est fixé à la batterie 40 et au bavolet 28 correspondant par des moyens de fixation 68, tel que des vis par exemple.

De préférence, le deuxième plancher 37B est en particulier fixé sur les longerons 38 et est différent du premier plancher 37A du premier véhicule 12A.

Par exemple, le deuxième plancher 37B présente une largeur plus grande que celle du premier plancher 37A.

En particulier, la différence de largeur entre le premier plancher 37A et le deuxième plancher 37B est sensiblement égale à la différence Δ entre la largeur P_{A} du premier véhicule 12A et la largeur P_{B} du deuxième véhicule 12B.

Par exemple, le deuxième plancher 37A définit par exemple des marchepieds 78B, notamment au niveau des portières, et en particulier fixé au bavolet 28 correspondant.

L'unité avant 27B du deuxième véhicule 12B est par exemple agencée à l'avant du deuxième véhicule 12B.

En particulier, l'unité avant 27B comprend le groupe avant 44 commun d'éléments et de préférence deux premiers bras de train avant 34B.

Le groupe avant 44 est identique dans la première configuration de fabrication et dans la seconde configuration de fabrication.

Autrement dit, les éléments du groupe avant 44 sont identiques dans le deuxième véhicule 12B que dans le premier véhicule 12A, et en particulier sont également agencés de la même manière.

De préférence, l'unité avant 27B du deuxième véhicule 12B comprend deux deuxièmes bras de train avant, en particulier différents des premiers bras de train avant 34A du premier véhicule 12A.

De préférence, les deuxièmes bras de train avant sont plus longs que les premiers bras de train avant 34A.

Les deux deuxièmes bras de train avant sont par exemple espacés l'un de l'autre selon la direction transversale Y_{B}.

En particulier, les deux deuxièmes bras de train avant correspondent à un bras de train avant gauche et un bras de train avant droit.

Par exemple, chacun des deux deuxièmes bras de train avant est notamment un bras à double triangulation.

Autrement, chacun des deux deuxièmes bras de train avant comprend un bras supérieur et un bras inférieur agencés l'un au-dessus de l'autre selon la direction verticale Z_{B}.

Chacun des bras supérieurs et inférieur comprend de préférence une branche transversale, par exemple fixée au moyeu de la roue avant correspondante, et une branche inclinée, en particulier formant un angle non nul avec la branche transversale.

Les branches des deuxièmes bras de train avant sont de préférence plus longues que les branches correspondantes des premiers bras de train avant.

L'unité arrière 29B du deuxième véhicule 12B est par exemple agencée à l'arrière du deuxième véhicule 12B.

En particulier, l'unité arrière 29B du deuxième véhicule 12B comprend le groupe arrière 33 commun d'éléments et de préférence au moins un parmi deux bras de train arrière 30 et deux amortisseurs arrière 32.

Le groupe arrière 33 est identique dans la première configuration de fabrication et dans la seconde configuration de fabrication.

Autrement dit, les éléments du groupe arrière 33 sont identiques dans le deuxième véhicule 12B que dans le premier véhicule 12A, et en particulier sont également agencés de la même manière.

Dans le deuxième véhicule 12B, les deux bras de train arrière 30 sont de préférence identiques à ceux utilisés dans le premier véhicule 12A, mais sont décalés transversalement.

Chaque bras de train arrière 30 du deuxième véhicule 12B est par exemple décalé transversalement de la distance δ par rapport à ceux du premier véhicule 12A.

En particulier, dans la deuxième configuration (deuxième véhicule 12B), les deux bras de train arrière 30 sont espacés l'un de l'autre selon la direction transversale Y_{A} d'une distance plus grande que dans la première configuration, notamment grâce aux pièces d'interface 80B.

En particulier, dans la deuxième configuration (deuxième véhicule 12B), les deux bras de train arrière 30 sont par exemple espacé l'un de l'autre d'une distance d₃,_{B}, notamment mesurée selon la direction transversale Y_{A}, la distance d₃,_{B} étant plus grande que la distance correspondante d₃,_{A} du premier véhicule 12A. La différence entre ces deux distances est par exemple égale à la distance δ, et notamment à la moitié de la différence Δ entre la largeur P_{A} du premier véhicule 12A et la largeur P_{B} du deuxième véhicule 12B.

Dans le deuxième véhicule 12B, les deux amortisseurs arrière 32 sont de préférence identiques à ceux utilisés dans le premier véhicule 12A, mais sont décalés transversalement.

Chaque amortisseurs arrière 32 du deuxième véhicule 12B est par exemple décalé transversalement de la distance δ par rapport à ceux du premier véhicule 12A.

En particulier, dans la deuxième configuration (deuxième véhicule 12B), les deux amortisseurs arrière 32 sont par exemple espacés l'un de l'autre d'une distance d₄,_{B}, notamment mesurée selon la direction transversale Y_{B}, la distance d₄,_{B} étant plus grande que la distance correspondante d₄,_{A} du premier véhicule 12A. La différence entre ces deux distances est par exemple égale à la distance δ, et notamment à la moitié de la différence Δ entre la largeur P_{A} du premier véhicule 12A et la largeur P_{B} du deuxième véhicule 12B.

Plus précisément, dans la deuxième configuration de fabrication (deuxième véhicule 12B), chacun des amortisseurs arrière 32 est agencé du côté externe du longeron 38 correspondant.

De préférence, l'unité planche de bord 31B du deuxième véhicule 12B comprend au moins un deuxième élément de bord 36B, et de préférence une pluralité de deuxièmes éléments de bord 36B, en particulier différents des premiers éléments de bord 36A du premier véhicule 12A.

Par exemple, chaque deuxième élément de bord 36B présente une largeur plus grande qu'un premier élément de bord 36A correspondant. Chacun des deuxièmes éléments de bord 36B est notamment choisi parmi un panneau de porte et un panneau de planche de bord.

Avantageusement, l'unité planche de bord 31B comprend également deux deuxièmes éléments structurels 39B, et en particulier un deuxièmes élément structurel gauche et un premier élément structurel droit.

Ces deux deuxièmes éléments structurels 39B de l'unité planche de bord 31B du deuxième véhicule 12B sont en particulier différents des premiers éléments structurels 39A du premier véhicule 12A.

Par exemple, chaque deuxième élément structurel 39B présente une largeur plus grande qu'un premier structurel 39A correspondant.

Plus précisément, les deux deuxièmes éléments structurels 39B sont des pieds A.

Un procédé de fabrication d'un véhicule 12A, 12B va maintenant être décrit.

Tout d'abord, le procédé comprend une étape de sélection de configuration parmi la première et la seconde configuration de fabrication.

Dans un premier cas, la première de configuration de fabrication est choisie.

Le procédé comprend une étape de fourniture des composants, et notamment du groupe central 26 commun d'éléments, des deux bavolets 28 et de préférence également d'un premier plancher 37A.

De préférence, cette étape comprend également la fourniture du groupe avant 44 commun d'éléments et par exemple des deux premiers bras de train avant 34A.

De préférence, cette étape comprend également la fourniture du groupe arrière 33 commun d'éléments et par exemple d'au moins un parmi deux bras de train arrière 30, deux amortisseurs arrière 32.

De préférence, cette étape comprend également la fourniture du groupe planche de bord 35 commun d'éléments et par exemple d'au moins un parmi un premier élément de bord 36A et deux premiers éléments structurels 39A.

Le procédé comprend ensuite une étape d'assemblage des composants fournis, en particulier de sorte à obtenir le premier véhicule 12A selon la première configuration.

Par exemple, cette étape d'assemblage comprend la fixation des bavolets 28 sur la batterie 40, de sorte à former l'unité centrale 25A du premier véhicule 12A.

En particulier, lors de cette étape, l'un des bavolets 28 est fixé à la face droite 52 de la batterie 40 et l''autre des bavolets 28 est fixé à la face gauche de la batterie 40.

Par exemple, cette étape d'assemblage comprend, en outre, la fixation du premier plancher 37A, en particulier sur les longerons 38.

De préférence, l'étape d'assemblage comprend également la fixation des deux premiers bras de train avant 34A, en particulier de sorte à former l'unité avant 27A du premier véhicule 12A. Par exemple, l'étape d'assemblage comprend, en outre, la fixation des deux bras de train arrière 30, par exemple de sorte à être espacés l'un de l'autre selon la direction transversale Y_{A} d'une distance d₃,_{A}.

De préférence, l'étape d'assemblage comprend également la fixation des deux amortisseurs arrière 32 aux bras de train arrière 30, par exemple de sorte à être espacés l'un de l'autre selon la direction transversale Y_{A} d'une distance d₄,_{A}.

De préférence, l'étape d'assemblage comprend également la fixation du ou des premiers éléments de bord 36A, en particulier sur la traverse de planche de bord 42.

De préférence, l'étape d'assemblage comprend également la fixation des premiers éléments structurels 39A.

Avantageusement, le procédé comprend en outre une étape d'ajustement de la position des roues avants et arrières, et en particulier de leur écuanteur.

Une première voiture 12A selon la première configuration de fabrication est ainsi obtenue.

Dans un deuxième cas, la deuxième de configuration de fabrication est choisie lors de l'étape de sélection.

Le procédé comprend alors également une étape de fourniture des composants, et notamment du groupe central 26 commun d'éléments, des deux bavolets 28, de deux pièces d'interface 80B, et de préférence également d'un deuxième plancher 37B.

De préférence, cette étape comprend également la fourniture du groupe avant 44 commun d'éléments et par exemple des deux deuxièmes bras de train avant 34B.

De préférence, cette étape comprend également la fourniture du groupe arrière 33 commun d'éléments et par exemple d'au moins un parmi deux bras de train arrière 30, deux amortisseurs arrière 32.

De préférence, cette étape comprend également la fourniture du groupe planche de bord 35 commun d'éléments et par exemple d'au moins un parmi un deuxième élément de bord 36B et deux deuxièmes éléments structurels 39B.

Le procédé comprend ensuite une étape d'assemblage des composants fournis entre eux, en particulier de sorte à obtenir le deuxième véhicule 12B selon la deuxième configuration.

Par exemple, cette étape d'assemblage comprend la fixation des pièces d'interface 80B entre les bavolets 28 et la batterie 40, de sorte à former l'unité centrale 25B du deuxième véhicule 12B.

En particulier, lors de cette étape, l'une des pièces d'interface 80B est fixée entre le bavolet droit 28 et la face droite 52 de la batterie 40 et l'autre des pièces d'interface 80B est fixée entre le bavolet gauche et la face gauche de la batterie 40.

Par exemple, l'étape d'assemblage comprend, en outre, la fixation du deuxième plancher 37B, en particulier sur les longerons 38.

De préférence, l'étape d'assemblage comprend également la fixation des deux deuxièmes bras de train avant, en particulier de sorte à former l'unité avant 27B du deuxième véhicule 12B.

Par exemple, l'étape d'assemblage comprend, en outre, la fixation des deux bras de train arrière 30, par exemple de sorte à être espacés l'un de l'autre selon la direction transversale Y_{B} d'une distance d₃,_{B}.

De préférence, l'étape d'assemblage comprend également la fixation des deux amortisseurs arrière 32 aux bras de train arrière 30, par exemple de sorte à être espacés l'un de l'autre selon la direction transversale Y_{B} d'une distance d₄,_{B}.

De préférence, l'étape d'assemblage comprend également la fixation du ou des deuxièmes éléments de bord 36B, en particulier sur la traverse de planche de bord 42.

De préférence, l'étape d'assemblage comprend également la fixation des deuxièmes éléments structurels 39B.

Avantageusement, le procédé comprend en outre une étape d'ajustement de la position des roues avants et arrières, et en particulier de leur écuanteur.

Une deuxième voiture 12B selon la deuxième configuration de fabrication est ainsi obtenue.

Un tel procédé de fabrication est particulièrement avantageux.

En particulier, un tel procédé permet à partir de nombreux composants communs d'obtenir deux véhicules 12A, 12B de largeurs différentes.

Un tel procédé de fabrication rend ainsi la fabrication du premier véhicule 12A et du deuxième véhicule 12B plus économique.

## Revendications

1. Procédé de fabrication d'un véhicule (12A, 12B), dans lequel le véhicule (12A, 12B) comprend une unité centrale (25A, 25B) comprenant:
a) un groupe central commun (26) d'éléments comprenant au moins :
i. deux longerons (38), chacun des longerons (38) s'étendant selon une direction longitudinale (X_{A}, X_{B}), les deux longerons (38) étant espacés l'un de l'autre selon une direction transversale (Y_{A}, Y_{B}) perpendiculaire à la direction longitudinale (X_{A}, X_{B}), et
ii. une batterie (40) agencée sous les deux longerons (38) et s'étendant selon la direction transversale (Y_{A}, Y_{B}) entre une face droite (52) et une face gauche, et
b) deux bavolets (28) espacés l'un de l'autre selon la direction transversale (Y_{A}, Y_{B});
**caractérisé en ce que** le procédé comprend une étape de sélection de configuration du véhicule entre une première configuration de fabrication et une deuxième configuration de fabrication,
**en ce que** la largeur (P_{A}) du véhicule (12A) selon la première configuration de fabrication est inférieure à celle (P_{B}) du véhicule (12B) selon la deuxième configuration de fabrication, la largeur (P_{A}, P_{B}) étant mesurée selon la direction transversale (Y_{A}, Y_{B}),
**en ce que** le groupe central commun (26) d'éléments étant identique dans la première configuration de fabrication et dans la deuxième configuration de fabrication,
**en ce que** dans la première configuration de fabrication, l'un des bavolets (28) est fixé à la face droite (52) de la batterie (40) et l'autre des bavolets (28) est fixé à la face gauche de la batterie (40), et
**en ce que** le véhicule (12B) dans la deuxième configuration comprend en outre deux pièces d'interface (80B), l'une des pièces d'interface (80B) étant fixée entre l'un des bavolets (28) et la face droite (52) de la batterie (40) et l'autre des pièces d'interface (80B) étant fixée entre l'autre des bavolets (28) et la face gauche de la batterie (40).

2. Procédé selon la revendication 1, dans lequel la différence de largeur du véhicule selon la première configuration et selon la deuxième configuration est comprise entre 80 mm et 160 mm, et de préférence entre 100 mm et 130 mm.

3. Procédé selon la revendication 1 ou 2, dans lequel chacune des pièces d'interface (80B) est une équerre.

4. Procédé selon l'un quelconque des revendications précédentes, dans lequel le véhicule (12A, 12B) comprend une unité arrière (29A, 29B) comprenant un groupe arrière (33) commun d'éléments et deux bras de train arrière (30),
le groupe arrière commun (33) d'éléments étant identique dans la première configuration de fabrication et dans la deuxième configuration de fabrication,
les deux bras de train arrière (30) étant espacés l'un de l'autre selon la direction transversale (Y_{A}, Y_{B}), la distance entre les deux bras de train arrière (30) dans la première configuration de fabrication étant inférieure à celle dans la deuxième configuration de fabrication.

5. Procédé selon la revendication 4, dans lequel l'unité arrière (29A, 29B) comprend deux amortisseurs arrière (32) fixés chacun à l'un des bras de train arrière, la distance entre les deux amortisseurs arrière dans la première configuration de fabrication étant inférieure à celle dans la deuxième configuration de fabrication.

6. Procédé selon l'une quelconque des revendications précédentes, dans lequel le véhicule (12A, 12B) comprend une unité avant (27A, 27B) comprenant un groupe avant (44) commun d'éléments, le groupe avant (44) commun d'éléments étant identique dans la première configuration de fabrication et dans la deuxième configuration de fabrication,
dans la première configuration, l'unité avant (27A) comprenant deux premiers bras de train avant (34A), et
dans la deuxième configuration, l'unité avant (27A) comprenant deux deuxièmes bras de train avant (34B), les deuxièmes bras de train avant (34B) étant plus longs que les premiers bras de train avant (34A).

7. Procédé selon l'une quelconque des revendications précédentes, dans lequel le véhicule (12A, 12B) comprend une unité planche de bord (31A, 31B) comprenant un groupe planche de bord (35) commun d'éléments, le groupe planche de bord (35) commun d'éléments étant identique dans la première configuration de fabrication et dans la deuxième configuration de fabrication,
le groupe planche de bord (35) comprenant une traverse de planche de bord (42) s'étendant transversalement.

8. Procédé selon la revendication 7, dans lequel l'unité planche de bord (31A) dans la première configuration comprend au moins un premier élément structurel (39A) fixé à la traverse de planche de bord (42) et l'unité planche de bord (31B) dans la deuxième configuration comprend au moins un deuxième élément structurel (39B) fixé à la traverse de planche de bord (42), le deuxième élément structurel (39B) étant plus large que le premier élément structurel (39A).

9. Ensemble (10) comprenant :
- un premier véhicule (12A) fabriqué selon le procédé de fabrication de l'une quelconque des revendications précédentes, le premier véhicule (12A) étant selon la première configuration, et
- un deuxième véhicule (12B) fabriqué selon le procédé de fabrication de l'une quelconque des revendications précédentes, le deuxième véhicule (12B) étant selon la deuxième configuration ;
la largeur (P_{A}) du premier véhicule (12A) étant inférieure à celle (P_{B}) du deuxième véhicule (12B).
